(19) Europäisches Patentamt
European Patent Office
Office européen des brevets

(11) **EP 1 365 589 B1**

(12) **FASCICULE DE BREVET EUROPEEN**

(45) Date de publication et mention
de la délivrance du brevet:
**03.04.2013 Bulletin 2013/14**

(51) Int Cl.:
*H04N 21/8358* (2011.01)    *G06T 1/00* (2006.01)
*H04N 21/2347* (2011.01)    *H04N 21/4405* (2011.01)

(21) Numéro de dépôt: **03291205.7**

(22) Date de dépôt: **21.05.2003**

(54) **Brouillage, débrouillage, codage et décodage de signal vidéo utilisant une clé de cryptage et une clé de marquage**

Verschlüsselung, Entschlüsselung, Kodierung und Dekodierung von Videosignalen unter Verwendung eines Schlüssels und eines Wasserzeichens

Scrambling, descrambling, coding and decoding of videosignals using an encryption key and watermarking

(84) Etats contractants désignés:
**AT BE BG CH CY CZ DE DK EE ES FI FR GB GR HU IE IT LI LU MC NL PT RO SE SI SK TR**

(30) Priorité: **24.05.2002 FR 0206405**

(43) Date de publication de la demande:
**26.11.2003 Bulletin 2003/48**

(73) Titulaire: **FRANCE TELECOM**
**75015 Paris (FR)**

(72) Inventeurs:
• **Bodo, Yann**
**35700 Rennes (FR)**
• **Laurent, Nathalie**
**35630 Vignoc (FR)**
• **Laurent, Christophe**
**35630 Vignoc (FR)**

(74) Mandataire: **Regimbeau**
**20, rue de Chazelles**
**75847 Paris Cedex 17 (FR)**

(56) Documents cités:
**WO-A-02/25861    US-A- 5 809 139**

• **GENE WEN ET AL: "A Format-Compliant Configurable Encryption Framework for Access Control of Multimedia", 57. MPEG MEETING; 16-07-2001 - 20-07-2001; SYDNEY; (MOTION PICTUREEXPERT GROUP OR ISO/IEC JTC1/SC29/WG11),, no. M7213, 2 June 2001 (2001-06-02), XP030036330, ISSN: 0000-0282**
• **YANN B ET AL: "A SCRAMBLING METHOD BASED ON DISTURBANCE OF MOTION VECTOR", PROCEEDINGS ACM MULTIMEDIA 2002. 10TH. INTERNATIONAL CONFERENCE ON MULTIMEDIA. JUAN-LES-PINS, FRANCE, DEC. 1 - 6, 2002; [ACM INTERNATIONAL MULTIMEDIA CONFERENCE], NEW YORK, NY : ACM, US, vol. CONF. 10, 1 December 2002 (2002-12-01), page 89/90, XP001174975, DOI: 10.1145/641007.641026 ISBN: 978-1-58113-620-3**
• **SHI C ET AL: "AN EFFICIENT MPEG VIDEO ENCRYPTION ALGORITHM", PROCEEDINGS OF THE 17TH IEEE SYMPOSIUM ON RELIABLE DISTRIBUTED SYSTEMS. SRDS '98. WEST LAFAYETTE, IN, OCT. 20 - 23, 1998; [IEEE SYMPOSIUM ON RELIABLE DISTRIBUTED SYSTEMS], LOS ALAMITOS, CA : IEEE COMPUTER SOC, US, 20 October 1998 (1998-10-20), pages 381-386, XP000873379, ISBN: 978-0-7803-5205-6**

**EP 1 365 589 B1**

**Description**

La présente invention concerne un procédé de brouillage d'un signal vidéo à l'aide d'une clé de cryptage pour le contrôle d'accès à des informations audiovisuelles émises par un serveur de diffusion.

L'invention concerne également un procédé de débrouillage de signal vidéo, un système, un codeur, un décodeur, un serveur de diffusion et un support de données pour la mise en oeuvre de ces procédés.

Il existe de nombreux procédés de brouillage mis en oeuvre pour le contrôle d'accès à des informations audiovisuelles. Par exemple, une solution est apportée par le procédé DVB Scrambling du consortium DVB (pour "Digital Video Broadcasting").

Ces procédés utilisent en général une clé de cryptage pour brouiller le signal vidéo. Celui-ci est en général basé sur une opération XOR entre le flux non brouillé et la clé de cryptage.

Par exemple dans le contexte de la diffusion de programmes, un utilisateur désirant accéder aux informations audiovisuelles, reçoit avec le signal vidéo brouillé un message de type ECM (pour "Entitlement Control Message") qui représente un paquet MPEG-2 TS (pour "MPEG-2 Transport Stream") transportant entre autre une clé de décryptage associée à la clé de cryptage. Cette clé de décryptage va être utilisée pour le débrouillage de la vidéo.

Malheureusement, le résultat de ce type de procédé de brouillage est la fourniture à l'utilisateur d'un signal vidéo brouillé mais non visualisable. Cette vidéo brouillée ne permet pas de donner un aperçu du contenu audiovisuel à l'utilisateur avant le débrouillage.

L'invention vise à remédier à cet inconvénient en fournissant un procédé de brouillage d'un signal vidéo qui permette de brouiller le contenu vidéo tout en conservant une certaine visibilité de celui-ci.

En outre, le document intitulé "A Format-Compliant Configurable Encryption Framework for Access Control of Multimedia", Gene Wen et al, 57. MPEG meeting; 16-20 Jul. 2001; Sydney, ISO/IEC JTC1/SC29/WG11, no. M7213, ISSN: 0000-0282, divulgue un procédé de brouillage d'un signal vidéo dans lequel des indices des vecteurs de mouvement sont cryptés par un algorithme tel que DES, ce qui a pour effet de permuter les vecteurs de mouvement de façon pseudo-aléatoire. Pour diminuer la quantité de calcul ou pour brouiller une vidéo de valeur modérée, un sous-ensemble seulement des vecteurs de mouvement sont cryptés.

A cet effet, l'invention concerne un procédé de brouillage du type précité, caractérisé en que le brouillage du signal vidéo est réalisé par l'application d'une fonction de tatouage au signal vidéo à l'aide d'une clé de marquage issue de la clé de cryptage, la fonction de tatouage comportant un paramètre de régulation de l'amplitude du tatouage permettant de régler la visibilité de celui-ci sur le signal vidéo, a fonction de tatouage étant appliquée à une représentation fréquentielle desdits vecteurs mouvement ;

Un procédé de brouillage selon l'invention peut en outre comporter l'une ou plusieurs des caractéristiques suivantes:

- les informations audiovisuelles sont accessibles à partir d'un serveur de diffusion ;
- les informations audiovisuelles sont stockées sur un support de données accessible en lecture ;
- la fonction de tatouage est appliquée à des vecteurs mouvement obtenus par codage du signal vidéo ;
- le brouillage comporte les étapes suivantes:

    • sélection de vecteurs mouvement parmi un ensemble de vecteurs mouvement obtenus par codage du signal vidéo,
    • séparation des composantes en abscisse et en ordonnée des vecteurs sélectionnés dans deux vecteurs nommés respectivement Vecteur Abscisse et Vecteur Ordonnée,
    • application d'une transformation de type DCT à une dimension sur chacun de ces deux vecteurs,
    • application de la fonction de tatouage à l'aide de la clé de marquage aux composantes des transformées DCT des vecteurs Abscisse et Ordonnée,
    • transformation DCT inverse des vecteurs Abscisse et Ordonnée et recombinaison de ceux-ci pour calculer la nouvelle valeur des vecteurs mouvement sélectionnés, après tatouage ;

- les vecteurs mouvement sont extraits directement du flux vidéo codé, le brouillage du signal vidéo s'effectuant postérieurement à son codage ;
- les vecteurs mouvement sont sélectionnés lors du codage du signal vidéo, le brouillage du signal vidéo étant alors réalisé pendant le codage de celui-ci ;
- le brouillage est combiné à un tatouage invisible du signal vidéo par l'application d'une fonction de tatouage à l'aide d'une clé de tatouage comportant des informations de droits d'auteur ;
- les informations de droits d'auteur comportent un identifiant de la vidéo et un identifiant de l'auteur ayant des droits sur la vidéo ;
- la clé de tatouage est combinée à la clé de marquage à l'aide d'une fonction bijective pour générer une nouvelle

2

clé de marquage utilisée à la place de la clé de marquage pour le brouillage du signal vidéo ;

- le codage du signal vidéo est conforme au standard MPEG-2 ou MPEG-4;
- un étalement de spectre est réalisé sur la clé de marquage ; et
- chaque image est brouillée par une clé de marquage obtenue par une permutation de la clé de marquage de l'image précédente.

L'invention concerne également un procédé de débrouillage d'un signal vidéo, à l'aide d'une clé de décryptage réalisé sur un signal brouillé par un procédé de brouillage tel que décrit précédemment.

Le procédé de débrouillage peut en outre comporter l'une ou plusieurs des caractéristiques suivantes:

- il comporte les étapes suivantes:

  • sélection de vecteurs mouvement parmi un ensemble de vecteurs mouvement obtenus par codage du signal vidéo,
  • séparation des composantes en abscisse et en ordonnée des vecteurs sélectionnés, dans deux vecteurs nommés respectivement Vecteur Abscisse et Vecteur Ordonnée,
  • application d'une transformation de type DCT à une dimension sur chacun de ces deux vecteurs,
  • application d'une fonction de tatouage à l'aide d'une clé de marquage issue de la clé de décryptage aux composantes des transformées DCT des vecteurs Abscisse et Ordonnée,
  • transformation DCT inverse des vecteurs Abscisse et Ordonnée et recombinaison de ceux-ci pour calculer la nouvelle valeur des vecteurs mouvement sélectionnés ; et

- chaque image est débrouillée par une clé de marquage obtenue par une permutation de la clé de marquage de l'image précédente.

L'invention concerne également un codeur comportant des moyens d'analyse de mouvement, caractérisé en ce qu'il comporte en outre des moyens de brouillage d'un signal vidéo mettant en oeuvre un procédé de brouillage tel que décrit précédemment.

L'invention concerne également un décodeur, caractérisé en ce qu'il comporte des moyens de débrouillage d'un signal vidéo mettant en oeuvre un procédé de débrouillage tel que décrit précédemment.

L'invention concerne également un serveur de diffusion d'un signal vidéo, caractérisé en ce qu'il comporte des moyens de brouillage de ce signal vidéo par la mise en oeuvre d'un procédé de brouillage tel que décrit précédemment.

L 'invention concerne également un terminal d'accès destiné à être connecté à un réseau de transmission d'informations pour la réception d'un signal vidéo diffusé sur ce réseau, caractérisé en ce qu'il comporte des moyens de débrouillage du signal vidéo par la mise en oeuvre d'un procédé de débrouillage tel que décrit précédemment.

L'invention concerne également un support de données lisible par un ordinateur, caractérisé en ce qu'il comporte des moyens de stockage d'un signal vidéo brouillé à l'aide d'un procédé de brouillage tel que décrit précédemment.

Enfin, l'invention concerne également un système de brouillage et de débrouillage d'un signal vidéo à l'aide d'une clé de cryptage pour le contrôle d'accès à des informations audiovisuelles, comportant un serveur de diffusion de ce signal vidéo, associé à des moyens de stockage du signal vidéo, et connecté à un réseau de transmission d'informations, pour la diffusion du signal vidéo, caractérisé en ce qu'il comporte des moyens de brouillage du signal vidéo par la mise en oeuvre d'un procédé de brouillage tel que décrit précédemment.

Un système de brouillage et de débrouillage selon l'invention peut en outre comporter la caractéristique selon laquelle il comporte un terminal d'accès connecté au réseau de transmission d'informations, ce terminal d'accès comportant des moyens de débrouillage du signal vidéo par la mise en oeuvre d'un procédé de débrouillage tel que décrit précédemment.

L'invention sera mieux comprise à l'aide de la description qui va suivre, donnée uniquement à titre d'exemple et faite en se référant aux dessins annexés sur lesquels:

- la figure 1 représente schématiquement la structure d'un système permettant la diffusion d'un signal vidéo à l'aide d'un procédé selon l'invention ;
- la figure 2 représente les différentes étapes d'un premier mode de réalisation d'un procédé de brouillage selon l'invention ;
- la figure 3 représente les différentes étapes d'un second mode de réalisation d'un procédé de brouillage selon l'invention ;
- la figure 4 représente un procédé d'échange de clés pour le débrouillage d'un signal vidéo brouillé à l'aide d'un procédé selon l'invention ; et
- la figure 5 représente les différentes étapes d'un procédé de débrouillage selon l'inention.

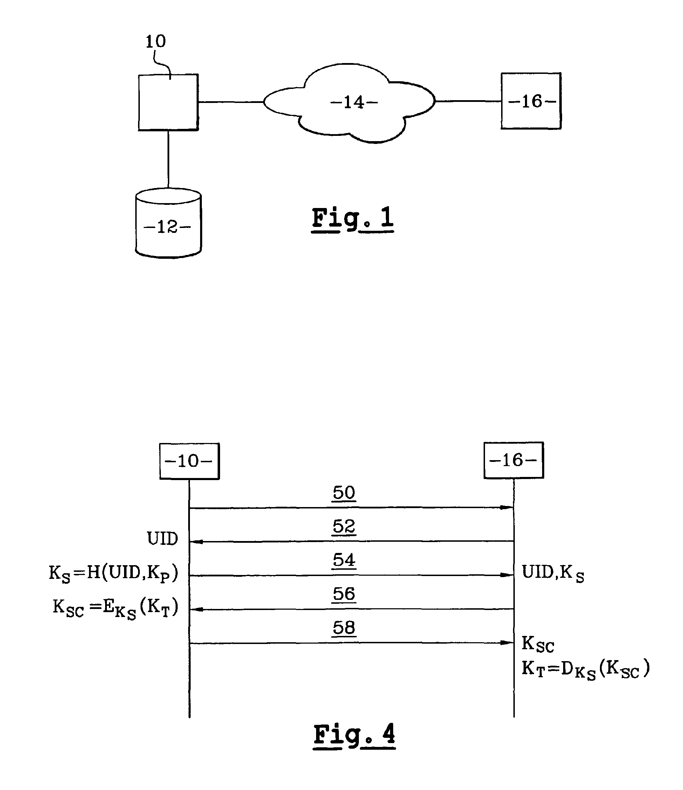

Le système représenté à la figure 1 comporte un serveur 10 de diffusion d'informations audiovisuelles stockées dans une base de données 12 reliée à celui-ci.

Le serveur de diffusion 10 est de type classique et comporte, par exemple, une unité centrale de calcul associée à des mémoires de type RAM et ROM pour la mise en oeuvre d'un procédé de brouillage des informations audiovisuelles destinées à être diffusées.

Le serveur de diffusion 10 est en outre connecté à un réseau de transmission d'informations 14, tel que le réseau Internet. A travers ce réseau, il peut ainsi transmettre des informations audiovisuelles brouillées à destination d'au moins un terminal client 16 identifié.

Des moyens d'échange sécurisé de données selon un protocole classique sont installés sur le serveur de diffusion 10, d'une part, et sur le terminal client 16, d'autre part.

L'installation de ces moyens d'échange sécurisé est rendue nécessaire pour la mise en oeuvre d'un procédé d'échange de données confidentielles, qui sera décrit en référence à la figure 4.

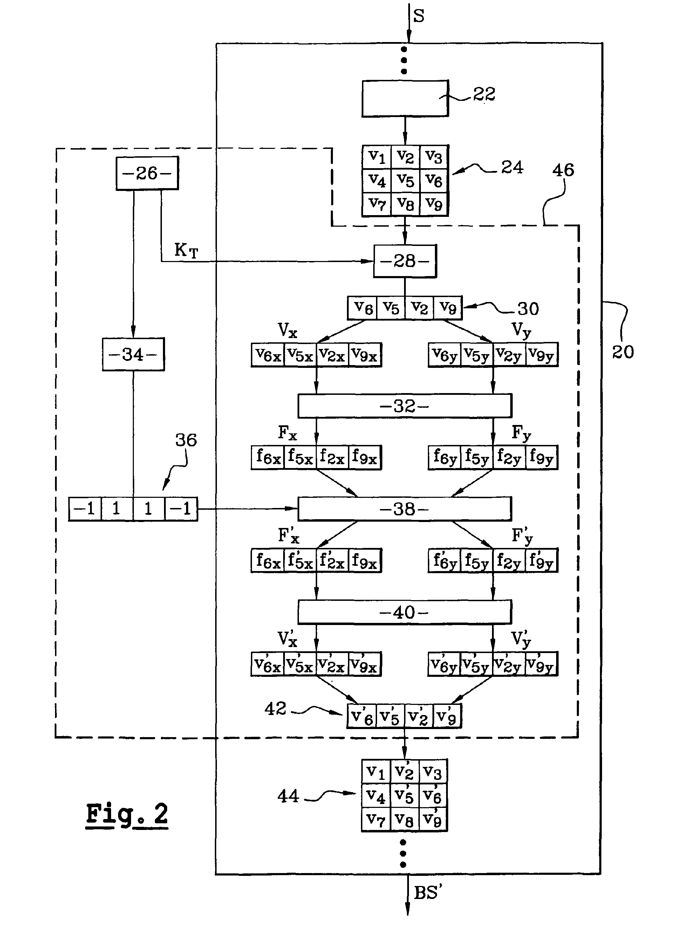

Le procédé de brouillage représenté à la figure 2 est mis en oeuvre par le serveur de diffusion 10 grâce à des moyens logiciels et matériels de celui-ci. Il a pour fonction de traiter un signal vidéo, en vue de brouiller celui-ci.

Dans ce mode de réalisation, le serveur de diffusion 10 comporte un codeur 20, par exemple un codeur de type MPEG-2, adapté pour recevoir, en entrée, un signal source vidéo S et pour fournir, en sortie, un signal binaire codé et prêt à être modulé avant sa diffusion sur le réseau 14.

Dans ce cas, le terminal client 16 est muni d'un décodeur de type MPEG-2, pour pouvoir décoder et afficher le signal source S.

Le serveur de diffusion 10 peut aussi utiliser un codeur au standard MPEG-4, mais dans ce cas, le décodeur du terminal client 16 doit également être conforme au standard MPEG-4. Il peut également utiliser tout autre codeur mettant en oeuvre une analyse du mouvement dans une séquence multidimensionnelle à composante temporelle.

De façon classique, le codeur 20 comporte un module 22 d'estimation de mouvement qui associe à une image donnée du signal vidéo S une matrice de vecteurs mouvement 24.

Cette matrice de vecteurs mouvement permet de générer une image prédite de l'image considérée à partir, par exemple de l'image précédente du signal vidéo, en déplaçant des macro-blocs de pixels de celle-ci, en fonction des vecteurs mouvement.

De la sorte, il est possible de ne transmettre que la matrice 24 de vecteurs mouvement et le contenu d'une image résiduelle, résultant de la différence entre l'image considérée et son image prédite, pour permettre à un décodeur de retrouver l'image considérée. En effet, à partir de l'image précédente, on peut reconstruire au décodage l'image prédite à l'aide de la matrice 24 de vecteurs mouvements, puis on peut retrouver l'image considérée en ajoutant à l'image prédite l'image résiduelle transmise. Ce procédé classique permet de comprimer efficacement le signal vidéo S.

La matrice de vecteurs mouvement 24 représentée sur cette figure comporte 9 vecteurs mouvement $V_1$ à $V_9$. Bien entendu le nombre de vecteurs mouvement sera généralement plus élevé. On n'en a représenté que neuf, par souci de clarté dans la suite de la description.

Lors d'une étape 26, le serveur de diffusion 10 génère une clé de cryptage $K_T$ associée au signal vidéo S. Cette clé est stockée dans la base de données 12 avec les données audiovisuelles correspondantes.

Ensuite, lors d'une étape 28, le serveur de diffusion 10 sélectionne, de façon pseudo-aléatoire, à partir de cette clé de cryptage, un ensemble 30 de vecteurs mouvement parmi les vecteurs mouvement de la matrice 24. Dans notre exemple, l'ensemble de vecteurs mouvement sélectionnés est constitué des vecteurs $V_6$, $V_5$, $V_2$ et $V_9$.

Le serveur 10 sépare ensuite les composantes en abscisse et en ordonnée des vecteurs sélectionnés dans deux vecteurs, nommés respectivement Vecteur abscisse $V_x$ et Vecteur ordonnée $V_y$. Ainsi, le vecteur $V_x$ comporte quatre composantes représentant les abscisses des quatre vecteurs de l'ensemble 30, soit:

$$V_x = (V_{6x}, V_{5x}, V_{2x}, V_{9x}).$$

De même, $V_y$ comporte quatre composantes issues des ordonnées des quatre vecteurs de l'ensemble 30, soit :

$$V_y = (V_{6y}, V_{5y}, V_{2y}, V_{9y}).$$

Lors de l'étape 32 suivante, le serveur de diffusion 10 applique une transformation de type DCT (de l'Anglais «Discrete Cosine Transform») à une dimension sur chacun de ces deux vecteurs.

On obtient ainsi deux vecteurs $F_X$ et $F_Y$ représentant, respectivement, les vecteurs $V_x$ et $V_y$ dans le domaine fréquentiel.

Ces deux nouveaux vecteurs comportent les composantes suivantes:

$$F_x = (F_{6x}, F_{5x}, F_{2x}, F_{9x}) \text{ et } F_y = (F_{6y}, F_{5y}, F_{2y}, F_{9y}).$$

Lors d'une étape 34 suivant l'étape 26 de génération de la clé de cryptage, le serveur de diffusion 10 génère une clé de marquage 36 représentant une version binaire de la clé de cryptage $K_T$, dans laquelle les valeurs nulles ont été remplacées par la valeur -1.

Pour rendre encore plus robuste le brouillage, un étalement de spectre de la clé de marquage 36 est avantageusement réalisé. Pour cela la clé de marquage est suréchantillonnée puis un bruit aléatoire lui est ajouté. Ainsi de la redondance est créée dans la clé de marquage qui de plus est brouillée par le bruit.

La clé de marquage comporte autant de composantes binaires qu'il y a de vecteurs mouvement sélectionnés lors de l'étape 28, c'est-à-dire que la clé de marquage 36 comporte autant de composantes que chacun des vecteurs $F_X$ et $F_Y$. Dans cet exemple, on a représenté une clé de marquage 36 comportant quatre composantes binaires, dont la première et la dernière ont pour valeur -1 et dont les deuxième et troisième ont pour valeur 1.

La clé de marquage 36 obtenue lors de l'étape 34 est insérée dans les composantes des vecteurs mouvements sélectionnés, lors d'une étape 38, par l'application de la fonction de tatouage suivante:

Si $W_i$ = -1, alors $F'X_i = FX_i + W_i\,\alpha$ et $F'Y_i = FY_i$,
sinon $F'X_i = FX_i$ et $F'Y_i = FY_i + W_i\,\alpha$,
où $W_i$, $FX_i$, $FY_i$, $F'X_i$ et $F'Y_i$ représentent, respectivement, les i-èmes composantes de la clé de marquage 36, des vecteurs $F_x$ et Fy et des nouvelles valeurs $F'_x$ et F'y des vecteurs $F_x$ et Fy après tatouage.

$\alpha$ est un coefficient choisi a priori, représentant la force de la marque. En effet, plus la valeur de $\alpha$ est importante, plus les composantes fréquentielles des vecteurs mouvement sélectionnés sont modifiées et plus le brouillage sera visible sur le signal vidéo.

Il résulte de cette opération qu'au sortir de l'étape 38 on obtient les deux vecteurs suivants:

$$F'_x = (F_{6x}, F'_{5x}, F'_{2x}, F_{9x}) \text{ et } F'_y = (F'_{6y}, F_{5y}, F_{2y}, F'_{9y}).$$

On passe ensuite à une étape 40, lors de laquelle le serveur de diffusion 10 applique une transformation DCT inverse sur les vecteurs $F'_x$ et F'y pour obtenir, en sortie, deux vecteurs $V'_x$ et V'y dont toutes les composantes diffèrent de celles des vecteurs $V_x$ et $V_y$. Ainsi, l'on constate que l'insertion de la clé de marquage 36 dans les vecteurs mouvement sélectionnés est répartie dans toutes les composantes de ceux-ci.

Ensuite, le serveur 10 combine de nouveau les composantes des vecteurs $V'_x$ et $V'_y$, afin de reconstruire un ensemble 42 de quatre vecteurs mouvement correspondant à des valeurs brouillées des vecteurs sélectionnés initiaux $V_6$ $V_5$ $V_2$ et $V_9$.

Ces nouveaux vecteurs mouvement sont notés $V'_6$, $V'_5$, $V'_2$, et $V'_9$.

Ces nouveaux vecteurs $V'_6$, $V'_5$, $V'_2$, et $V'_9$ remplacent les vecteurs $V_6$, $V_5$, $V_2$, et $V_9$ pour fournir une nouvelle matrice 44 de vecteurs mouvement. Cette nouvelle matrice 44 permettra au décodage d'obtenir une version brouillée de l'image initiale considérée.

L'ensemble des étapes permettant de générer la matrice 44 à partir de la matrice de vecteurs mouvement 24, c'est-à-dire l'ensemble constitué par les étapes 26, 28, 32, 34, 38 et 40 sera appelé par la suite module de brouillage et sera désigné par la référence générale 46.

Dans le codeur 20, de façon classique, l'estimation de mouvement est réitérée sur chaque image du signal vidéo S, de sorte que l'on obtient, en sortie du codeur 20, un signal binaire brouillé BS', dont toutes les matrices de vecteurs mouvement sont brouillées, et qui peut être stocké dans la base de données 12 avant d'être diffusé à travers le réseau 14.

Il est possible, à chaque itération de réaliser une permutation classique sur la clé de marquage avant de l'insérer dans l'image vidéo suivante, pour rendre cette clé encore plus difficilement détectable.

De façon optionnelle, le procédé précédemment décrit comporte une étape (non représentée) de tatouage invisible du signal vidéo S.

Ce tatouage est réalisé de façon classique par l'application d'une fonction de tatouage du signal, par exemple similaire à la fonction précédemment décrite, avec une valeur de $\alpha$ suffisamment faible pour que le tatouage soit invisible, et à l'aide d'une seconde clé de marquage. Cette seconde clé de marquage, appelée « clé de tatouage », est par exemple constituée d'un identifiant de l'auteur ayant des droits sur la vidéo.

L'étape de tatouage peut être réalisée indépendamment du brouillage et, soit avant, soit après le module de brouillage 46.

L'étape de tatouage peut aussi être combinée au brouillage. En effet, il est possible de corréler la clé de tatouage et la clé de marquage 36 à l'aide d'une fonction bijective telle qu'une fonction XOR, pour générer une nouvelle clé de marquage que l'on appellera « clé de marquage tatouée ». Cette clé de marquage tatouée est alors utilisée par le module de brouillage 46 à la place de la clé de marquage 36.

La bijectivité de la fonction de corrélation permet d'assurer la possibilité de débrouiller le signal sans nécessairement ôter son tatouage.

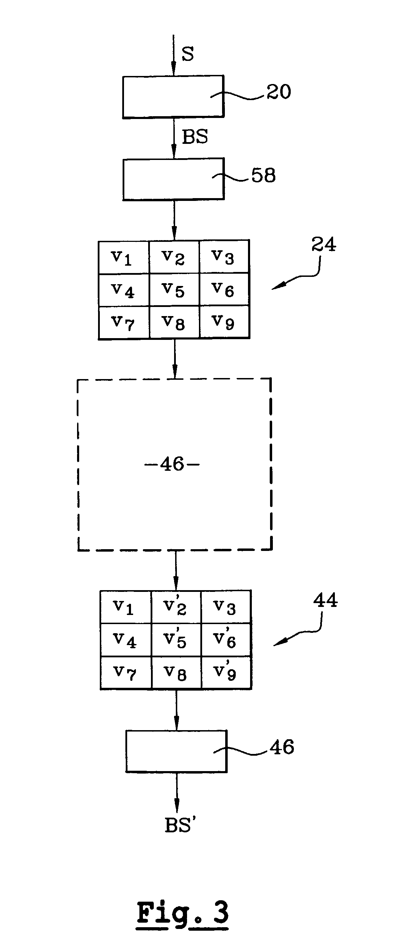

La figure 3 représente un second mode de réalisation du procédé de brouillage représenté à la figure 2.

Alors que dans l'exemple précédent, le module de brouillage 46 était présenté comme partie intégrante du codeur 20 et opérant à la suite d'une étape 22 d'estimation de mouvements, le mode de réalisation de la figure 3 présente un module de brouillage 46 indépendant du codeur 20.

En effet, dans ce mode de réalisation le signal vidéo S est tout d'abord traité par le codeur 20 pour fournir un signal binaire BS en sortie de celui-ci.

Ce signal binaire BS est ensuite fourni en entrée d'un analyseur syntaxique 58 capable d'extraire automatiquement la matrice 24 de vecteurs mouvement. Comme précédemment, cette matrice 24 est fournie en entrée du module de brouillage 46, pour obtenir, en sortie, une nouvelle matrice 44 brouillée.

Enfin, lors d'une dernière étape 60, la nouvelle matrice 44 est réintroduite dans le signal binaire BS en remplacement de l'ancienne matrice 24 pour fournir le signal binaire brouillé BS'. Cette opération est effectuée sur toutes les matrices de vecteurs mouvement du signal binaire BS.

L'étape de tatouage précédemment décrite peut également être exécutée dans ce mode de réalisation, indépendamment du module de brouillage 46 ou en combinaison avec le brouillage.

Le terminal client 16 étant muni d'un décodeur compatible avec le standard MPEG-2, il est adapté pour décoder le signal binaire BS' diffusé par le serveur de diffusion 10.

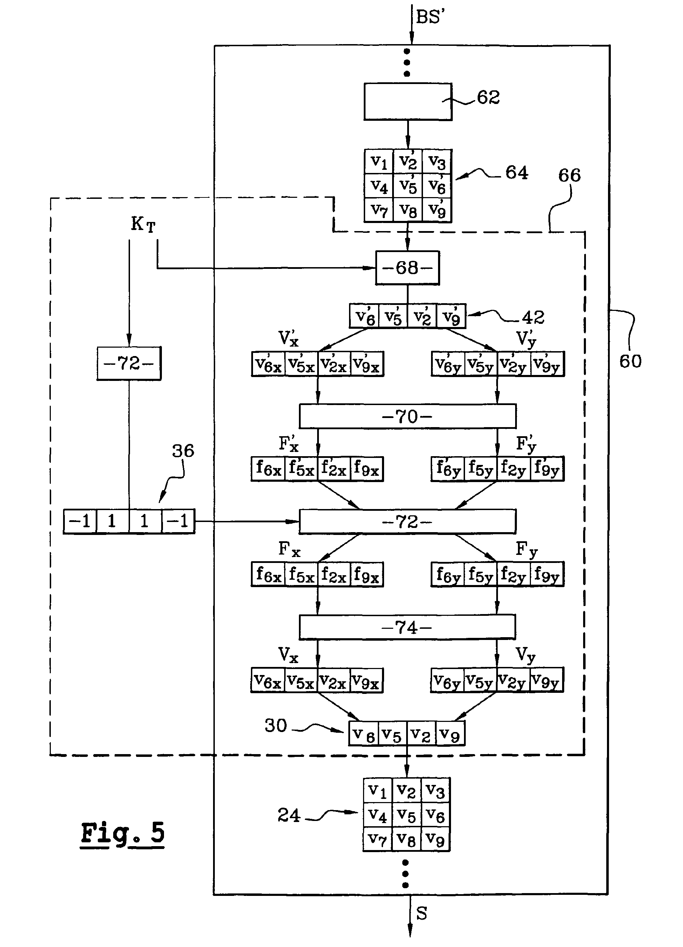

Si, de plus, le terminal client 16 est en possession de la clé de cryptage $K_T$, il sera capable de retrouver les bonnes valeurs des vecteurs mouvement brouillés, par un procédé dual du module de brouillage 46 précédemment décrit. Ce procédé dual, appelé procédé de débrouillage, sera détaillé en référence à la figure 5.

Pour permettre un débrouillage par le terminal client 16, un procédé de transmission de la clé de cryptage $K_T$ est décrit en référence à la figure 4.

Lors d'une première étape 50, le terminal client 16 télécharge, à partir du serveur de diffusion 10, un signal binaire vidéo brouillé BS'.

Lors de l'étape 52 suivante, le terminal utilisateur 16 demande au serveur de diffusion 10 le téléchargement d'une application de débrouillage pour visualiser le contenu vidéo qui l'intéresse.

A la réception de cette requête, le serveur de diffusion 10 génère un identifiant UID et une clé secrète $K_S$ obtenue par l'application d'une fonction de hachage sur l'identifiant UID et sur une clé maîtresse $K_P$.

Lors de l'étape 54 suivante, le serveur de diffusion transmet l'application de débrouillage demandée par le terminal client 16. Cette application comporte, de façon sécurisée, l'identifiant UID et la clé secrète $K_S$. La clé $K_S$ est stockée de façon sécurisée chez l'utilisateur. Ainsi, celui-ci ne peut y avoir accès.

Ensuite, lors d'une étape 56, un procédé d'achat des droits de visualisation de la vidéo est mis en oeuvre entre le terminal client 16 et le serveur de diffusion 10. Lorsque l'achat est effectué, le serveur de diffusion 10 extrait de la base de données 12 la clé de cryptage $K_T$ permettant de débrouiller le contenu vidéo et chiffre celle-ci à l'aide d'une fonction d'encryptage $E_{KS}$ dépendant de la clé secrète $K_S$.

On obtient ainsi une clé de cryptage chiffrée $K_{SC}$.

Enfin, lors d'une dernière étape 58, le serveur de diffusion 10 transmet la clé de cryptage chiffrée au terminal client 16.

Celui-ci peut retrouver la clé de cryptage $K_T$ à partir de la clé de cryptage chiffrée et de la clé secrète $K_S$ stockée par l'application téléchargée, à l'aide d'une fonction de décryptage $D_{KS}$ duale de la fonction d'encryptage $E_{KS}$.

Le terminal client 16 comporte un décodeur 60 représenté sur la figure 5.

Le décodeur 60 reçoit en entrée le signal binaire vidéo brouillé BS' pour fournir en sortie le signal décodé et débrouillé S prêt à être affiché sur un écran de visualisation du terminal client 16.

Le décodeur 60 comporte notamment un module 62 d'extraction de vecteurs mouvement. Ce module d'extraction 62 fournit en sortie une matrice 64 de vecteur mouvement identique à la matrice 44.

Cette matrice 64 comporte au moins en partie des vecteurs mouvement brouillés et est fournie en entrée d'un module 66 de débrouillage du décodeur 60. Le module de débrouillage 66 comporte des moyens logiciels classiques pour la mise en oeuvre d'un procédé comportant une première étape 68 de sélection pseudo-aléatoire de vecteurs mouvement. Lors de cette étape, la sélection est exécutée à l'aide de la clé de cryptage $K_T$, de la même manière qu'à l'étape 28, c'est-à-dire à l'aide d'un même algorithme de sélection pseudo-aléatoire. De la sorte, les vecteurs sélectionnés lors de cette étape sont les mêmes vecteurs que ceux qui ont été sélectionnés lors de l'étape 28. Il s'agit de l'ensemble 42 des vecteurs $V'_6$, $V'_5$, $V'_2$ et $V'_9$.

On sépare ensuite les composantes en abscisse et en ordonnée de ces quatre vecteurs dans deux vecteurs nommés respectivement vecteur abscisse V'$_x$ et vecteur ordonnée V'y.

Lors de l'étape 70 suivante, on applique une transformation de type DCT à une dimension sur chacun de ces deux vecteurs V'$_x$ et V'y.

On obtient ainsi les deux vecteurs F'$_x$ et F'y décrits précédemment, représentant chacun les vecteurs V'$_x$ et V'y dans le domaine fréquentiel.

Lors d'une étape 72 identique à l'étape 34, le terminal client 16 génère la clé de marquage 36 à partir de la clé de cryptage K$_T$. De même que précédemment, un étalement de spectre peut être effectué sur la clé de marquage 36.

Lors de l'étape 72 suivant l'étape 70, la clé de marquage 36, qui a été insérée dans les composantes des vecteurs mouvement sélectionnés lors du brouillage du signal vidéo S, est maintenant extraite de ces vecteurs, par l'application de la fonction suivante, qui est une fonction duale de la fonction de tatouage précédemment décrite:

Si W$_i$ = -1, alors F'X$_i$ = FX$_i$ - W$_i$ $\alpha$ et F'Y$_i$ = FY$_i$,
sinon F'X$_i$ = FX$_i$ et F'Y$_i$ = FY$_i$ - W$_i$ $\alpha$,

Il résulte de cette opération, qu'au sortir de l'étape 72, on obtient les deux vecteurs suivants:

$$F_x = (F_{6x}, F_{5x}, F_{2x}, F_{9x}) \text{ et } F_y = (F_{6y}, F_{5y}, F_{2y}, F_{9y}).$$

On passe ensuite à une étape 74, lors de laquelle on applique une transformation DCT inverse sur les vecteurs F$_x$ et Fy pour obtenir, les deux vecteurs V$_x$ et Vy comprenant respectivement les composantes en abscisse et en ordonnée des vecteurs mouvement sélectionnés débrouillés.

Ensuite, on combine les composantes des vecteurs V$_x$ et V$_y$, afin de reconstruire l'ensemble 30 constitué des vecteurs mouvement V$_6$, V$_5$, V$_2$ et V$_9$.

On retrouve ainsi, en sortie du module de débrouillage 66 la matrice 24 de vecteurs mouvement débrouillés.

De même que pour le brouillage du signal S lors de son codage, le débrouillage peut être effectué indépendamment du décodage, par un procédé dual du procédé décrit à la figure 3.

Il apparaît clairement qu'un procédé de brouillage d'un signal vidéo selon l'invention permet d'améliorer la diffusion de contenus audiovisuels payants en permettant de brouiller le signal vidéo transmis sans pour autant empêcher sa visualisation par un utilisateur potentiellement intéressé.

Un autre avantage de l'invention précédemment décrite est de permettre de combiner le tatouage invisible du contenu vidéo à son brouillage.

## Revendications

1. Procédé de brouillage d'un signal vidéo (S), à l'aide d'une clé de cryptage (KT) pour le contrôle d'accès à des informations audiovisuelles, **caractérisé en ce que** le procédé comprend une étape de brouillage du signal vidéo dans laquelle une clé de marquage (36) est générée à partir de la clé de cryptage puis est insérée dans des composantes fréquentielles de vecteurs mouvement (V6, V5, V2, V9) du signal vidéo, l'insertion de la clé de marquage étant réalisée par l'application d'une fonction de tatouage dépendant de la clé de marquage et comportant un paramètre de régulation de l'amplitude du tatouage permettant de régler la visibilité de celui-ci sur le signal vidéo.

2. Procédé de brouillage selon la revendication 1, **caractérisé en ce que** les informations audiovisuelles sont accessibles à partir d'un serveur de diffusion (10).

3. Procédé de brouillage selon la revendication 1 ou 2, **caractérisé en ce que** les informations audiovisuelles sont stockées sur un support de données (12) accessible en lecture.

4. Procédé de brouillage selon la revendication 1, **caractérisé en ce que** le brouillage comporte les étapes suivantes:

  - sélection (28) de vecteurs mouvement (V6, V5, V2, V9) parmi un ensemble (24) de vecteurs mouvement obtenus par codage du signal vidéo ;
  - séparation des composantes en abscisse et en ordonnée des vecteurs sélectionnés, dans deux vecteurs nommés respectivement Vecteur Abscisse (VX) et Vecteur ordonnée (VY);
  - application (32) d'une transformation de type DCT à une dimension sur chacun de ces deux vecteurs ;

- application (38) de la fonction de tatouage à l'aide de la clé de marquage (36) aux composantes (FX, FY) des transformées DCT des vecteurs Abscisse et Ordonnée ;
- transformation DCT inverse des vecteurs Abscisse et Ordonnée et recombinaison de ceux-ci pour calculer la nouvelle valeur des vecteurs mouvement sélectionnés, après tatouage.

**5.** Procédé de brouillage selon l'une quelconque des revendications 1 à 4, **caractérisé en ce que** les vecteurs mouvement (V6, V5, V2, V9) sont extraits directement du flux vidéo codé (BS), le brouillage (46) du signal vidéo s'effectuant postérieurement à son codage (20).

**6.** Procédé de brouillage selon l'une quelconque des revendications 1 à 5, **caractérisé en ce que** les vecteurs mouvement (V6, V5, V2, V9) sont sélectionnés lors du codage (20) du signal vidéo, le brouillage (46) du signal vidéo étant alors réalisé pendant le codage de celui-ci.

**7.** Procédé de brouillage selon l'une quelconque des revendications 1 à 6, **caractérisé en ce que** le brouillage est combiné à un tatouage invisible du signal vidéo (S) par l'application d'une fonction de tatouage à l'aide d'une clé de tatouage comportant des informations de droits d'auteur.

**8.** Procédé de brouillage selon la revendication 7, **caractérisé en ce que** les informations de droits d'auteur comportent un identifiant (UID) de la vidéo et un identifiant de l'auteur ayant des droits sur la vidéo.

**9.** Procédé de brouillage selon la revendication 7 ou 8, **caractérisé en ce que** ladite clé de tatouage est combinée à la clé de marquage (36) à l'aide d'une fonction bijective pour générer une nouvelle clé de marquage utilisée à la place de la clé de marquage (36) pour le brouillage du signal vidéo (S).

**10.** Procédé de brouillage selon l'une quelconque des revendications 1 à 9, **caractérisé en ce que** le codage (20) du signal vidéo (S) est conforme au standard MPEG-2 ou MPEG-4.

**11.** Procédé de brouillage selon l'une quelconque des revendications 1 à 10, **caractérisé en ce qu'**un étalement de spectre est réalisé sur la clé de marquage (36).

**12.** Procédé de brouillage selon l'une quelconque des revendications 1 à 11, **caractérisé en ce que** chaque image est brouillée par une clé de marquage (36) obtenue par une permutation de la clé de marquage de l'image précédente.

**13.** Procédé de débrouillage d'un signal vidéo (S), à l'aide d'une clé de décryptage (KT), **caractérisé en ce que** le procédé comprend une étape de débrouillage du signal vidéo dans laquelle une clé de marquage est générée à partir de la clé de décryptage puis est extraite de composantes fréquentielles de vecteur mouvement du signal vidéo, l'extraction étant réalisée par l'application d'une fonction duale d'une fonction de tatouage ladite fonction duale dépendant de la clé de décryptage et comportant un paramètre de régulation de l'amplitude du tatouage permettant de régler la visibilité de celui-ci sur le signal vidéo.

**14.** Procédé de débrouillage selon la revendication 13, **caractérisé en ce que** le débrouillage comporte les étapes suivantes:

- sélection de vecteurs mouvement (V'6, V'5, V'2, V'9) parmi un ensemble de vecteurs mouvement obtenus par codage du signal vidéo ;
- séparation des composantes en abscisse et en ordonnée des vecteurs sélectionnés, dans deux vecteurs nommés respectivement Vecteur Abscisse (V'x) et Vecteur Ordonnée (V'y) ;
- application d'une transformation de type DCT à une dimension sur chacun de ces deux vecteurs ;
- application d'une fonction de tatouage à l'aide d'une clé de marquage (36) issue de la clé de décryptage aux composantes (F'X, F'Y) des transformées DCT des vecteurs Abscisse et Ordonnée ;
- transformation DCT inverse des vecteurs Abscisse et Ordonnée et recombinaison de ceux-ci pour calculer la nouvelle valeur des vecteurs mouvement sélectionnés.

**15.** Procédé de débrouillage selon la revendication 13 ou 14, **caractérisé en ce que** chaque image est débrouillée par une clé de marquage obtenue par une permutation de la clé de marquage de l'image précédente.

**16.** Codeur comportant des moyens d'analyse de mouvement, **caractérisé en ce qu'**il comporte en outre des moyens de brouillage d'un signal vidéo (S) mettant en oeuvre un procédé selon l'une quelconque des revendications 1 à 12.

**17.** Décodeur, **caractérisé en ce qu'**il comporte des moyens de débrouillage d'un signal vidéo (S) mettant en oeuvre un procédé de débrouillage selon l'une quelconque des revendications 13 à 15.

**18.** Serveur (10) de diffusion d'un signal vidéo (S), **caractérisé en ce qu'**il comporte des moyens de brouillage de ce signal vidéo (S) par la mise en oeuvre d'un procédé selon l'une quelconque des revendications 1 à 12.

**19.** Terminal d'accès (16) destiné à être connecté à un réseau de transmission d'informations (14) pour la réception d'un signal vidéo (S) diffusé sur ce réseau, **caractérisé en ce qu'**il comporte des moyens de débrouillage du signal vidéo (S) par la mise en oeuvre d'un procédé selon l'une quelconque des revendications 13 à 15.

**20.** Support de données (12) lisible par un ordinateur, **caractérisé en ce qu'**il comporte des moyens de stockage dans lesquels est stocké un signal vidéo (S) brouillé à l'aide d'un procédé selon l'une quelconque des revendications 1 à 12.

**21.** Système de brouillage et de débrouillage d'un signal vidéo (S) à l'aide d'une clé de cryptage (KT) pour le contrôle d'accès à des informations audiovisuelles, comportant un serveur de diffusion (10) de ce signal vidéo (S), associé à des moyens de stockage (12) du signal vidéo (S), et connecté à un réseau (14) de transmission d'informations, pour la diffusion du signal vidéo (S), **caractérisé en ce qu'**il comporte des moyens de brouillage du signal vidéo (S) par la mise en oeuvre d'un procédé selon l'une quelconque des revendications 1 à 12.

**22.** Système de brouillage et de débrouillage selon la revendication 21, **caractérisé en ce qu'**il comporte en outre un terminal d'accès (16) connecté au réseau de transmission d'informations (14), ce terminal d'accès (16) comportant des moyens de débrouillage du signal vidéo (S) par la mise en oeuvre d'un procédé selon l'une quelconque des revendications 13 à 15.

**Claims**

**1.** Method for scrambling a video signal (S), with the aid of an encryption key (KT) for the control of access to audiovisual information, **characterized in that** the method comprises a step of scrambling the video signal, in which a marking key (36) is generated from the encryption key and is then inserted into frequency components of motion vectors (V6, V5, V2, V9) of the video signal, the insertion of the marking key being carried out by the application of a watermarking function depending on the marking key and comprising a parameter for regulating the amplitude of the watermarking making it possible to adjust the visibility of the latter on the video signal.

**2.** Scrambling method according to Claim 1, **characterized in that** the audiovisual information is accessible from a broadcasting server (10).

**3.** Scrambling method according to Claim 1 or 2, **characterized in that** the audiovisual information is stored on a read-accessible data medium (12).

**4.** Scrambling method according to Claim 1, **characterized in that** the scrambling comprises the following steps:

- selection (28) of motion vectors (V6, V5, V2, V9) from among a set (24) of motion vectors obtained by coding the video signal;
- separation of the abscissa component and ordinate component of the selected vectors, into two vectors named respectively Abscissa Vector (VX) and ordinate Vector (VY);
- application (32) of a transformation of one-dimensional DCT type to each of these two vectors;
- application (38) of the watermarking function with the aid of the marking key (36) to the components (FX, FY) of the DCT transforms of the Abscissa and Ordinate vectors;
- inverse DCT transformation of the Abscissa and Ordinate vectors and recombination of the latter to calculate the new value of the selected motion vectors, after watermarking.

**5.** Scrambling method according to any one of Claims 1 to 4, **characterized in that** the motion vectors (V6, V5, V2, V9) are extracted directly from the coded video stream (BS), the scrambling (46) of the video signal being performed subsequent to its coding (20).

**6.** Scrambling method according to any one of Claims 1 to 5, **characterized in that** the motion vectors (V6, V5, V2, V9) are selected during the coding (20) of the video signal, the scrambling (46) of the video signal then being carried out during the coding of the latter.

7. Scrambling method according to any one of Claims 1 to 6, **characterized in that** the scrambling is combined with an invisible watermarking of the video signal (S) by the application of a watermarking function with the aid of a watermarking key comprising information concerning copyright.

8. Scrambling method according to Claim 7, **characterized in that** the information concerning copyright comprises an identifier (UID) of the video and an identifier of the author having rights on the video.

9. Scrambling method according to Claim 7 or 8, **characterized in that** the said watermarking key is combined with the marking key (36) with the aid of a bijective function so as to generate a new marking key used in place of the marking key (36) for the scrambling of the video signal (S).

10. Scrambling method according to any one of Claims 1 to 9, **characterized in that** the coding (20) of the video signal (S) complies with the MPEG-2 or MPEG-4 standard.

11. Scrambling method according to any one of Claims 1 to 10, **characterized in that** a spread spectrum is effected on the marking key (36).

12. Scrambling method according to any one of Claims 1 to 11, **characterized in that** each image is scrambled by a marking key (36) obtained by a permutation of the marking key for the previous image.

13. Method for descrambling a video signal (S), with the aid of a decryption key (KT), **characterized in that** the method comprises a step of descrambling the video signal, in which a marking key is generated from the decryption key and is then extracted from frequency components of motion vectors of the video signal, the extraction being carried out by the application of a dual function of a watermarking function said dual function depending on the decryption key and comprising a parameter for regulating the amplitude of the watermarking making it possible to adjust the visibility of the latter on the video signal.

14. Descrambling method according to Claim 13, **characterized in that** the descrambling comprises the following steps:

- selection of motion vectors (V'6, V'5, V'2, V'9) from among a set of motion vectors obtained by coding the video signal;
- separation of the abscissa component and ordinate component of the selected vectors, into two vectors named respectively Abscissa Vector (V'x) and Ordinate Vector (V'y);
- application of a transformation of one-dimensional DCT type to each of these two vectors;
- application of a watermarking function with the aid of a marking key (36) arising from the decryption key to the components (F'X, F'Y) of the DCT transforms of the Abscissa and Ordinate vectors;
- inverse DCT transformation of the Abscissa and Ordinate vectors and recombination of the latter to calculate the new value of the selected motion vectors.

15. Descrambling method according to Claim 13 or 14, **characterized in that** each image is descrambled by a marking key obtained by a permutation of the marking key for the previous image.

16. Coder comprising motion analysis means, **characterized in that** it furthermore comprises means for scrambling a video signal (S) implementing a method according to any one of Claims 1 to 12.

17. Decoder, **characterized in that** it comprises means for descrambling a video signal (S) implementing a descrambling method according to any one of Claims 13 to 15.

18. Server (10) for broadcasting a video signal (S), **characterized in that** it comprises means for scrambling this video signal (S) by the implementation of a method according to any one of Claims 1 to 12.

19. Access terminal (16) intended to be connected to an information transmission network (14) for the reception of a video signal (S) broadcast on this network, **characterized in that** it comprises means for descrambling the video signal (S) by the implementation of a method according to any one of Claims 13 to 15.

20. Data medium (12) readable by a computer, **characterized in that** it comprises storage means in which is stored a video signal (S) scrambled with the aid of a method according to any one of Claims 1 to 12.

21. System for scrambling and descrambling a video signal (S) with the aid of an encryption key (KT) for the control of access to audiovisual information, comprising a server (10) for broadcasting this video signal (S), associated with storage means (12) for storing the video signal (S), and connected to an information transmission network (14), for the broadcasting of the video signal (S), **characterized in that** it comprises means for scrambling the video signal (S) by the implementation of a method according to any one of Claims 1 to 12.

22. Scrambling and descrambling system according to Claim 21, **characterized in that** it furthermore comprises an access terminal (16) connected to the information transmission network (14), this access terminal (16) comprising means for descrambling the video signal (S) by the implementation of a method according to any one of Claims 13 to 15.

**Patentansprüche**

1. Verfahren zur Verwürfelung eines Videosignals (S) mit Hilfe eines Verschlüsselungsschlüssels (KT) zur Kontrolle des Zugriffs auf audiovisuelle Informationen, **dadurch gekennzeichnet, dass** das Verfahren einen Schritt der Verwürfelung des Videosignals enthält, in dem ein Kennzeichnungsschlüssel (36) ausgehend vom Verschlüsselungsschlüssel generiert und dann in Frequenzkomponenten von Bewegungsvektoren (V6, V5, V2, V9) des Videosignals eingefügt wird, wobei die Einfügung des Kennzeichnungsschlüssels durch die Anwendung einer Wasserzeichenfunktion durchgeführt wird, die vom Kennzeichnungsschlüssel abhängt und einen Regelungsparameter der Amplitude des Wasserzeichens aufweist, der es ermöglicht, dessen Sichtbarkeit im Videosignal zu regeln.

2. Verwürfelungsverfahren nach Anspruch 1, **dadurch gekennzeichnet, dass** die audiovisuellen Informationen ausgehend von einem Verbreitungsserver (10) zugänglich sind.

3. Verwürfelungsverfahren nach Anspruch 1 oder 2, **dadurch gekennzeichnet, dass** die audiovisuellen Informationen auf einem Datenträger mit Lesezugriff (12) gespeichert sind.

4. Verwürfelungsverfahren nach Anspruch 1, **dadurch gekennzeichnet, dass** die Verwürfelung die folgenden Schritte aufweist:

   - Auswahl (28) von Bewegungsvektoren (V6, V5, V2, V9) aus einer Einheit (24) von Bewegungsvektoren, die durch Codierung des Videosignals erhalten werden;
   - Trennung der Abszissen- und Ordinatenkomponenten der ausgewählten Vektoren in zwei Vektoren, Abszissen-Vektor (VX) bzw. Ordinaten-Vektor (VY) genannt;
   - Anwendung (32) einer Transformation von der Art DCT an eine Dimension auf jedem dieser zwei Vektoren;
   - Anwendung (38) der Wasserzeichenfunktion mit Hilfe des Kennzeichnungsschlüssels (36) an die Komponenten (FX, FY) der DCT-Transformierten der Abszissen- und Ordinaten-Vektoren;
   - inverse DCT-Transformation der Abszissen- und Ordinaten-Vektoren und deren erneute Kombination, um den neuen Wert der ausgewählten Bewegungsvektoren nach der Herstellung des Wasserzeichens zu berechnen.

5. Verwürfelungsverfahren nach einem der Ansprüche 1 bis 4, **dadurch gekennzeichnet, dass** die Bewegungsvektoren (V6, V5, V2, V9) direkt aus dem codierten Videostrom (BS) entnommen werden, wobei die Verwürfelung (46) des Videosignals nach seiner Codierung (20) erfolgt.

6. Verwürfelungsverfahren nach einem der Ansprüche 1 bis 5, **dadurch gekennzeichnet, dass** die Bewegungsvektoren (V6, V5, V2, V9) bei der Codierung (20) des Videosignals ausgewählt werden, wobei die Verwürfelung (46) des Videosignals dann während dessen Codierung durchgeführt wird.

7. Verwürfelungsverfahren nach einem der Ansprüche 1 bis 6, **dadurch gekennzeichnet, dass** die Verwürfelung mit einem unsichtbaren Wasserzeichen des Videosignals (S) durch Anwendung einer Wasserzeichenfunktion mit Hilfe eines Wasserzeichenschlüssels kombiniert wird, der Urheberrechtsinformationen aufweist.

8. Verwürfelungsverfahren nach Anspruch 7, **dadurch gekennzeichnet, dass** die Urheberrechtsinformationen eine Kennung (UID) des Videos und eine Kennung des Urhebers aufweisen, der Rechte am Video hat.

9. Verwürfelungsverfahren nach Anspruch 7 oder 8, **dadurch gekennzeichnet, dass** der Wasserzeichenschlüssel mit dem Kennzeichnungsschlüssel (36) mit Hilfe einer bijektiven Funktion kombiniert wird, um einen neuen Kennzeichnungsschlüssel zu generieren, der anstelle des Kennzeichnungsschlüssels (36) für die Verwürfelung des Videosignals (S) verwendet wird.

10. Verwürfelungsverfahren nach einem der Ansprüche 1 bis 9, **dadurch gekennzeichnet, dass** die Codierung (20) des Videosignals (S) dem Standard MPEG-2 oder MPEG-4 entspricht.

11. Verwürfelungsverfahren nach einem der Ansprüche 1 bis 10, **dadurch gekennzeichnet, dass** eine Spektrumsspreizung auf dem Kennzeichnungsschlüssel (36) durchgeführt wird.

12. Verwürfelungsverfahren nach einem der Ansprüche 1 bis 11, **dadurch gekennzeichnet, dass** jedes Bild durch einen Kennzeichnungsschlüssel (36) verwürfelt wird, der durch eine Permutation des Kennzeichnungsschlüssels des vorhergehenden Bilds erhalten wird.

13. Verfahren zur Entwürfelung eines Videosignals (S) mit Hilfe eines Entschlüsselungsschlüssels (KT), **dadurch gekennzeichnet, dass** das Verfahren einen Schritt der Entwürfelung des Videosignals enthält, in dem ein Kennzeichnungsschlüssel ausgehend vom Entschlüsselungsschlüssel generiert und dann aus Bewegungsvektor-Frequenzkomponenten des Videosignals entnommen wird, wobei die Entnahme durch Anwendung einer dualen Funktion einer Wasserzeichenfunktion durchgeführt wird, wobei die duale Funktion vom Entschlüsselungsschlüssel abhängt und einen Regelungsparameter der Amplitude des Wasserzeichens aufweist, der es ermöglicht, dessen Sichtbarkeit im Videosignal zu regeln.

14. Entwürfelungsverfahren nach Anspruch 13, **dadurch gekennzeichnet, dass** die Entwürfelung die folgenden Schritte aufweist:

   - Auswahl von Bewegungsvektoren (V'6, V'5, V'2, V'9) aus einer Einheit von Bewegungsvektoren, die durch Codierung des Videosignals erhalten werden;
   - Trennung der Abszissen- und Ordinatenkomponenten der ausgewählten Vektoren in zwei Vektoren, Abszissen-Vektor (V'x) bzw. Ordinaten-Vektor (V'y) genannt;
   - Anwendung einer Transformation von der Art DCT an eine Dimension auf jedem dieser zwei Vektoren;
   - Anwendung einer Wasserzeichenfunktion mit Hilfe eines vom Entschlüsselungsschlüssel stammenden Kennzeichnungsschlüssels (36) an die Komponenten (F'X, F'Y) der DCT-Transformierten der Abszissen- und Ordinaten-Vektoren;
   - inverse DCT-Transformation der Abszissen- und Ordinaten-Vektoren und deren erneute Kombination, um den neuen Wert der ausgewählten Bewegungsvektoren zu berechnen.

15. Entwürfelungsverfahren nach Anspruch 13 oder 14, **dadurch gekennzeichnet, dass** jedes Bild durch einen Kennzeichnungsschlüssel entwürfelt wird, der durch eine Permutation des Kennzeichnungsschlüssels des vorhergehenden Bilds erhalten wird.

16. Codierer, der Einrichtungen zur Bewegungsanalyse aufweist, **dadurch gekennzeichnet, dass** er außerdem Einrichtungen zur Verwürfelung eines Videosignals (S) aufweist, die ein Verfahren nach einem der Ansprüche 1 bis 12 anwenden.

17. Decodierer, **dadurch gekennzeichnet, dass** er Einrichtungen zur Entwürfelung eines Videosignals (S) aufweist, die ein Entwürfelungsverfahren nach einem der Ansprüche 13 bis 15 anwenden.

18. Verbreitungsserver (10) eines Videosignals (S), **dadurch gekennzeichnet, dass** er Einrichtungen zur Verwürfelung dieses Videosignals (S) durch die Anwendung eines Verfahrens nach einem der Ansprüche 1 bis 12 aufweist.

19. Zugangsendgerät (16), das dazu bestimmt ist, mit einem Informationsübertragungsnetz (14) für den Empfang eines Videosignals (S) verbunden zu werden, das in diesem Netz verbreitet wird, **dadurch gekennzeichnet, dass** es Einrichtungen zur Entwürfelung des Videosignals (S) durch die Anwendung eines Verfahrens nach einem der Ansprüche 13 bis 15 aufweist.

20. Computerlesbarer Datenträger (12), **dadurch gekennzeichnet, dass** er Speichereinrichtungen aufweist, in denen ein Videosignal (S) gespeichert ist, das mit Hilfe eines Verfahrens nach einem der Ansprüche 1 bis 12 verwürfelt wurde.

21. System zur Verwürfelung und Entwürfelung eines Videosignals (S) mit Hilfe eines Verschlüsselungsschlüssels (KT) zur Kontrolle des Zugriffs auf audiovisuelle Informationen, das einen Verbreitungsserver (10) dieses Videosignals (S) aufweist, der Speichereinrichtungen (12) des Videosignals (S) zugeordnet und mit einem Informationsübertragungsnetz (14) für die Verbreitung des Videosignals (S) verbunden ist, **dadurch gekennzeichnet, dass** es Einrichtungen zur Verwürfelung des Videosignals (S) durch die Anwendung eines Verfahrens nach einem der Ansprüche 1 bis 12 aufweist.

22. System zur Verwürfelung und Entwürfelung nach Anspruch 21, **dadurch gekennzeichnet, dass** es außerdem ein mit dem Informationsübertragungsnetz (14) verbundenes Zugangsendgerät (16) aufweist, wobei dieses Zugangsendgerät (16) Einrichtungen zur Entwürfelung des Videosignals (S) durch die Anwendung eines Verfahrens nach einem der Ansprüche 13 bis 15 aufweist.

**Fig. 1**

**Fig. 4**

**Fig. 2**

**Fig. 3**

BS'

62

| $v_1$ | $v_2'$ | $v_3$ |
|---|---|---|
| $v_4$ | $v_5'$ | $v_6'$ |
| $v_7$ | $v_8$ | $v_9'$ |

64

66

$K_T$

−68−

| $v_6'$ | $v_5'$ | $v_2'$ | $v_9'$ |
|---|---|---|---|

42

60

$V_x'$

| $v_{6x}'$ | $v_{5x}'$ | $v_{2x}'$ | $v_{9x}'$ |
|---|---|---|---|

$V_y'$

| $v_{6y}'$ | $v_{5y}'$ | $v_{2y}'$ | $v_{9y}'$ |
|---|---|---|---|

−72−

−70−

$F_x'$

| $f_{6x}'$ | $f_{5x}'$ | $f_{2x}'$ | $f_{9x}$ |
|---|---|---|---|

$F_y'$

| $f_{6y}'$ | $f_{5y}$ | $f_{2y}$ | $f_{9y}'$ |
|---|---|---|---|

36

| −1 | 1 | 1 | −1 |
|---|---|---|---|

−72−

$F_x$

| $f_{6x}$ | $f_{5x}$ | $f_{2x}$ | $f_{9x}$ |
|---|---|---|---|

$F_y$

| $f_{6y}$ | $f_{5y}$ | $f_{2y}$ | $f_{9y}$ |
|---|---|---|---|

−74−

$V_x$

| $v_{6x}$ | $v_{5x}$ | $v_{2x}$ | $v_{9x}$ |
|---|---|---|---|

$V_y$

| $v_{6y}$ | $v_{5y}$ | $v_{2y}$ | $v_{9y}$ |
|---|---|---|---|

30

| $v_6$ | $v_5$ | $v_2$ | $v_9$ |
|---|---|---|---|

24

| $v_1$ | $v_2$ | $v_3$ |
|---|---|---|
| $v_4$ | $v_5$ | $v_6$ |
| $v_7$ | $v_8$ | $v_9$ |

S

## Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

* **GENE WEN et al.** A Format-Compliant Configurable Encryption Framework for Access Control of Multimedia. *57. MPEG meeting,* 16 Juillet 2001, ISSN 0000-0282